# EUROPÄISCHE PATENTSCHRIFT

(11) **EP 3 736 077 B1**
(45) Veröffentlichungstag und Bekanntmachung des Hinweises auf die Patenterteilung: **09.03.2022**
(21) Anmeldenummer: 20164070.3
(22) Anmeldetag: 19.03.2020
(51) Int. Cl.: B23K 26/38, G05B 19/18

(54) **VERFAHREN ZUM SCHNEIDEN EINES WERKSTÜCKTEILS AUS EINEM PLATTENFÖRMIGEN WERKSTÜCK**
METHOD OF CUTTING A WORKPIECE PART FROM A PLATE-SHAPED WORKPIECE
PROCÉDÉ DE COUPE D'UNE PARTIE DE PIÈCE À PARTIR D'UNE PIÈCE EN FORME DE PLAQUE

(30) Priorität: 10.05.2019 DE 102019206799
(43) Veröffentlichungstag der Anmeldung: 11.11.2020
(73) Patentinhaber: TRUMPF Werkzeugmaschinen GmbH + Co. KG, 71254 Ditzingen (DE)
(72) Erfinder: Rominger, Volker, 71711 Steinheim an der Murr (DE); Mach, Patrick, 71384 Weinstadt (DE); Sepp, Florian, 86972 Altenstadt (DE); Weiß, Dr. Christoph, 86971 Peiting (DE)
(74) Vertreter: Kohler Schmid Möbus Patentanwälte

(56) Entgegenhaltungen:
- DE-B3-102006 036 870
- DE-B3-102014 200 208
- JP-A- H0 455 076
- JP-A- H0 938 898
- JP-A- H11 123 576

## Beschreibung

Die vorliegende Erfindung betrifft ein Verfahren zum Schneiden eines Werkstückteils aus einem plattenförmigen Werkstück mittels eines Bearbeitungsstrahls, insbesondere mittels eines Laserstrahls, gemäß dem Oberbegriff des Anspruchs 1 (siehe z.B. JP H09 38898 A).

Beim Laserschneiden von Werkstückteilen aus einem plattenförmigen Werkstück werden bei Werkstückteilen, die Innenkonturen wie zum Beispiel Öffnungen aufweisen, üblicherweise zunächst die Innenkonturen geschnitten und die dabei entstehenden Abfallteile, auch Butzen genannt, durch Fallenlassen nach unten aus dem Schneidbereich der Maschine abgeführt. Anschließend wird die Außenkontur des Werkstückteils geschnitten, um das Werkstückteil von dem plattenförmigen Werkstück zu trennen.

Bei Schneiden von dicken Werkstücken, insbesondere mit einer Dicke von größer 3 mm, kann es durch den Energieeintrag des Laserstrahls bei eng benachbarten Innenkonturen dazu kommen, dass das Werkstück im Bereich der Innenkonturen überhitzt. Dies wirkt sich nachteilig auf die Werkstückgeometrie aus, da das Werkstück sich verformt. Auch auf den weiteren Schneidprozess kann dies negative Auswirkungen haben, zum Beispiel durch geänderte Prozessbedingungen. Es können zudem Anlassfarben auf der Schneidkante auftreten, d.h. oberflächliche Färbungen, die sich durch Einbringung von Wärme ergeben. Weiter können Gratbildung oder, insbesondere beim Brennschnitt, sogenanntes Selfburning auftreten.

Bei einem in der JPH 0455076 A beschriebenen Verfahren wird eine Region berechnet, die beim Laserschneiden durch Hitze beeinträchtigt ist. Die Berechnung wird bei der Festlegung der Schneidreihenfolge von zu schneidenden Werkstückteilen berücksichtigt.

Bei einem in der US 2008/0053977 A1 beschriebenen Verfahren wird die Reihenfolge der Abarbeitung von Werkstückteilen in Abhängigkeit von einer berechneten Wärmedichte bzw. von Wärmezonen festgelegt.

Aus der JP 2004287894 A ist es bekannt, beim Laserschneiden die Abarbeitungsreihenfolge von Bereichen von zu schneidenden Werkstücken anzupassen, sodass bei eng geschachtelten Konturen Abkühlzeiten eingehalten werden können.

Aus der DE 10129751 A1 ist es bekannt, die Temperatur des Werkstücks in Schnittnähe zu überwachen, beim Überschreiten einer Grenztemperatur den Schnitt zu unterbrechen und zunächst an einer anderen Stelle des Werkstücks weiterzuschneiden. Wenn ein Abkühlzeitgeber abgelaufen ist, wird der Schnitt vervollständigt.

Aus JPH 09285886 A ist es bekannt, beim Schneiden mehrerer Werkstückteile (Gutteile), die gemeinsame Kanten aufweisen, zunächst die Außenkontur aller Teile weitgehend zu schneiden. Anschließend werden dann Trennschnitte entlang der gemeinsamen Kanten ausgeführt und danach das letzte Teilstück der Außenkontur geschnitten.

### Aufgabe der Erfindung

Der Erfindung liegt die Aufgabe zugrunde, ein Verfahren anzugeben, mit dem die Schneidqualität beim Schneiden von Werkstückteilen mit Innenkonturen verbessert wird.

### Gegenstand der Erfindung

Diese Aufgabe wird durch ein Verfahren gemäß dem Anspruch 1 gelöst, umfassend die Schritte: a) vollständiges Schneiden mindestens einer Innenkontur des Werkstückteils, b) Schneiden eines Abschnitts einer Außenkontur des Werkstückteils, sowie vollständiges Schneiden mindestens einer weiteren Innenkontur des Werkstückteils. Die drei Schritte werden in der Reihenfolge a), b), c) abgearbeitet.

Diese Festlegung einer solchen Abarbeitungsreihenfolge an einem Werkstückteil mit Innenkonturen führt dazu, dass nach dem vollständigen Schneiden von einer oder von mehreren Innenkonturen durch das nachfolgende Schneiden eines Abschnitts der Außenkontur der Innenbereich des Werkstückteils zunächst abkühlen kann, bevor weitere Innenkonturen geschnitten werden.

Gemäß einer vorteilhaften Weiterbildung wird mindestens ein Cluster von benachbarten Innenkonturen gebildet und die Innenkontur und die weitere Innenkontur sind Teil des Clusters von benachbarten Innenkonturen. Ein Cluster ist eine Gruppierung von Innenkonturen, die nah beieinander liegen. Im Sinne dieser Anmeldung werden Innenkonturen als benachbart angesehen, die einen Abstand von weniger als 5 mm, bevorzugt von weniger als 3 mm voneinander aufweisen. Die Zuordnung der Innenkonturen zu einem Cluster bzw. die Bildung des Clusters kann von einer Maschinensteuerung oder von einer Programmier-Software zur Erstellung von Steuerungsprogrammen für die Bearbeitungsmaschine vorgenommen werden, die eine Bahnplanung für die schneidende Bearbeitung mit dem Bearbeitungsstrahl vorgibt.

Auf die weiter oben beschriebene Weise kann die Abarbeitungsreihenfolge so gestaltet werden, dass insbesondere bei eng benachbarten Innenkonturen eines Clusters der Bereich des Werkstückteils um diese Innenkonturen herum immer ausreichend Zeit zum Abkühlen hat, bevor weiter an den Innenkonturen dieses Clusters gearbeitet wird. Die Bahnplanung des Laserstrahls wird hierbei so gestaltet, dass innerhalb eines Clusters von Innenkonturen ausreichend Zeit zur Reduzierung der Werkstücktemperatur bleibt, indem nach dem Schneiden einer Innenkontur des Clusters woanders weitergeschnitten wird, bevor die nächste Innenkontur dieses Clusters bearbeitet wird. Auf diese Weise wird vermieden, dass es zu einer Überhitzung im Bereich des Clusters kommt. Daher können SelfBurning, das Auftreten von Anlassfarben oder Gratbildung an den Innenkonturen innerhalb des Clusters vermieden oder zumindest reduziert werden.

Bei einer Variante des Verfahrens wird in Schritt b) ein von dem Cluster entfernter Abschnitt der Außenkontur geschnitten. Dies ermöglicht es, den Bereich des Clusters abzukühlen, bevor im Bereich des Clusters weiter geschnitten wird. Im Sinne dieser Anmeldung wird unter einem vom Cluster entfernten Abschnitt der Außenkontur verstanden, dass der Abschnitt, genauer gesagt das dem Cluster zugewandte Ende des Abschnitts der Außenkontur, einen Abstand von mindestens 3 cm von der am nächsten benachbarten Innenkontur des Clusters aufweist.

Bei einer weiteren Variante wird in einem Schritt a1) vor Schritt a), also vor dem vollständigen dem Schneiden der mindestens einen Innenkontur des Werkstückteils, ein erster Abschnitt der Außenkontur des Werkstückteils geschnitten, bevor mit dem Schneiden der mindestens einen Innenkontur begonnen wird. Der erste Abschnitt der Außenkontur ist bevorzugt benachbart zu dem Cluster von Innenkonturen angeordnet. Auf diese Weise kann am Anfang des Bearbeitungsvorgangs die Außenkante des Werkstückteils benachbart zu dem Cluster mit hoher Qualität geschnitten werden, bevor ein Wärmeeintrag in den Cluster von Innenkonturen erfolgt, der zu einer Deformation des Werkstückteils an der benachbarten Außenkante führt. Unter einem zum Cluster benachbarten Abschnitt der Außenkontur wird im Sinne dieser Anmeldung eine Abschnitt der Außenkontur verstanden, dessen dem Cluster abgewandtes Ende einen Abstand von nicht mehr als 3 cm von der am nächsten benachbarten Innenkontur des Clusters aufweist.

In einer bevorzugten Variante wird nach Schritt a1), also nach dem Schneiden des ersten Abschnitts der Außenkontur und vor dem vollständigen Schneiden der mindestens einen Innenkontur des Clusters (in Schritt a)) ein von dem Cluster entfernter Abschnitt der Außenkontur geschnitten. Auf diese Weise kann sichergestellt werden, dass sich das Werkstück im Bereich des Clusters so weit abkühlt, dass die Innenkontur(en) mit hoher Genauigkeit geschnitten werden können. Erst nach dem Schneiden dieses Abschnitts der Außenkontur, die vom Cluster wegführt, wird dann die erste Innenkontur des Clusters geschnitten.

In einer alternativen Variante wird nach dem Schneiden des ersten Abschnitts der Außenkontur (Schritt a1)) eine Innenkontur des Werkstückteils geschnitten, die nicht Teil des Clusters von Innenkonturen ist. Diese Innenkontur liegt also außerhalb des Clusters und hat einen gewissen räumlichen Abstand zum Cluster, in der Regel mindestens einen Abstand von ca. 3 cm von dem Cluster, so dass beim Schneiden der Innenkontur außerhalb des Clusters kein oder nur ein geringer Wärmeeintrag in den Bereich des Clusters erfolgt. Während des Schneidens der Innenkontur außerhalb des Clusters kühlt sich der Bereich des Clusters daher ab, so dass nach dem Abschluss des Schneidens dieser Innenkontur mit dem Schneiden der ersten Innenkontur des Clusters begonnen werden kann.

In einer alternativen Variante wird nach dem Schneiden des ersten Abschnitts der Außenkontur (Schritt a1)) und vor dem vollständigen Schneiden der mindestens einen Innenkontur (Schritt a)) eine Kontur in dem Werkstück geschnitten, die außerhalb des Werkstückteils liegt. Die Kontur außerhalb des Werkstückteils ist so weit von dem Cluster entfernt angeordnet, dass sich auch in diesem Fall das Werkstückteil im Bereich des Clusters nach dem Schneiden des ersten Abschnitts der Außenkontur abkühlen kann, bevor die Innenkonturen des Clusters geschnitten werden.

Wie weiter oben beschrieben wurde, erfolgt nach dem vollständigen Schneiden von einer oder von mehreren Innenkonturen des Clusters das Schneiden eines (weiteren) Abschnitts der Außenkontur. Nach dem Schneiden aller Innenkonturen des Werkstückteils, d.h. sowohl den Innenkonturen des Clusters als auch von Innenkonturen, die außerhalb des Clusters liegen, erfolgt bei einer Variante des Verfahrens das vollständige Freischneiden des Werkstückteils aus dem plattenförmigen Werkstück entlang der Außenkontur, genauer gesagt entlang eines noch verbliebenen Abschnitts der Außenkontur. Nach dem vollständigen Freischneiden des Werkstückteils kann dieses aus dem Schneidbereich der Maschine entfernt werden.

Das erfindungsgemäße Verfahren ist insbesondere dann vorteilhaft, wenn die Innenkonturen mit hoher Maßhaltigkeit und Qualität geschnitten werden sollen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:

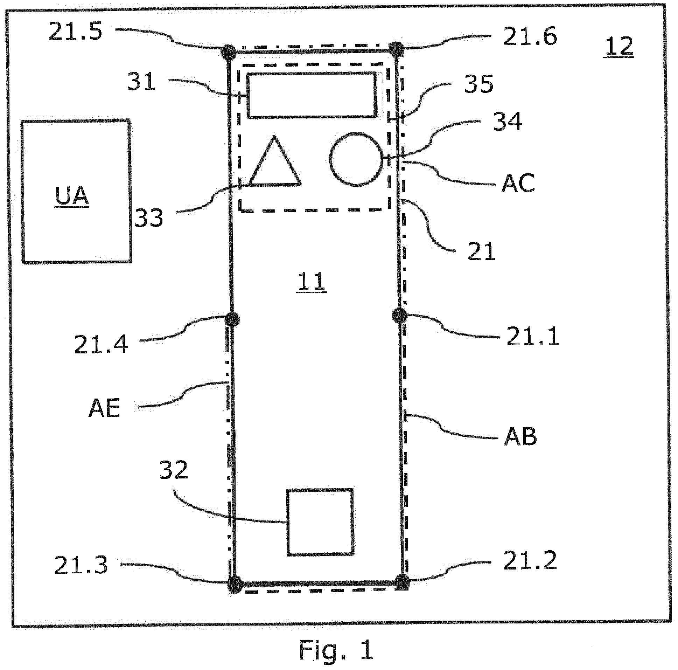

- Fig. 1: in schematischer Darstellung ein plattenförmiges Werkstück mit einem zu schneidenden rechteckigen Werkstückteil.

**Fig. 1** zeigt ein plattenförmiges Werkstück 12, aus dem ein rechteckiges Werkstückteil 11 mittels eines Bearbeitungsstrahls, insbesondere mittels eines Laserstrahls, ausgeschnitten werden soll. Das Werkstückteil 11 weist eine Außenkontur 21 und mehrere Innenkonturen 31, 32, 33 und 34 auf. In dem Werkstück 12 ist weiterhin eine Kontur UA dargestellt, die von dem Werkstückteil 11 entfernt angeordnet ist.

Bei dem Werkstück 12 handelt es sich im gezeigten Beispiel um 20 mm dicken Baustahl. Das rechteckige Werkstückteil 11 weist vier Innenkonturen 31, 33, 34, 32 in Form eines Rechtecks 31, eines Dreiecks 33, eines Kreises 34 und eines Quadrates 32 auf und soll mittels Sauerstoff-Laserschneidens geschnitten werden.

Zu diesem Zweck wird in einem ersten Schritt von einer nicht bildlich dargestellten Maschinensteuerung einer Laserbearbeitungsmaschine oder in einer Programmier-Software zur Erstellung von Steuerungsprogrammen für die Maschinensteuerung der Laserbearbeitungsmaschine geprüft, welche der Innenkonturen 31, 32, 33, 34 benachbart zueinander angeordnet sind, was im gezeigten Beispiel bei dem Rechteck 31, dem Dreieck 33 und dem Kreis 34 der Fall ist. Diese drei Innenkonturen 31, 33, 34 werden einem Cluster 35 zugeordnet bzw. es wird in der Maschinensteuerung oder in der Programmier-Software ein Cluster 35 gebildet.

Bei einer Variante des Schneidens des Werkstückteils 11 aus dem Werkstück 12 wird in einem ersten Schritt a) als erste Innenkontur 31 des Clusters 35 das Rechteck geschnitten. In einen nachfolgenden Schritt b) wird zur Abkühlung der Blechtemperatur im Bereich des Clusters 35 ein Abschnitt AB der Außenkontur 21 geschnitten. Der gestrichelt dargestellte Abschnitt AB erstreckt sich von der Mitte einer Längsseite (erster Punkt 21.1) über eine Ecke (zweiter Punkt 21.2) des Werkstückteils 11 entlang einer Querseite bis zu einer weiteren Ecke (dritter Punkt 21.3) der Außenkontur 21. Der Abschnitt AB ist von dem Cluster 35 entfernt angeordnet, d.h. dessen dem Cluster 35 benachbartes Ende (Punkt 21.1) weist einen Abstand von mindestens 3 cm von der nächstliegenden Innenkontur 34 des Clusters 35 auf.

In einem nachfolgenden Schritt c) wird das Dreieck als zweite Innenkontur 33 des Clusters 35 geschnitten. Als Nächstes wird eine Innenkontur 32 außerhalb des Clusters 35 geschnitten, bei der es sich um ein Quadrat handelt. Während des Schneidvorgangs an der Innenkontur 32 kann die Werkstücktemperatur innerhalb des Clusters 35 wieder sinken, so dass in einem nachfolgenden Schritt das Schneiden der dritten Innenkontur 34, hier ein Kreis, als letzte noch verbleibende Innenkontur des Werkstückteils 11 innerhalb des Clusters 35 erfolgen kann. Zum Schluss wird die Außenkontur 21 komplett freigeschnitten, d.h. es wird der noch verbleibende Rest-Abschnitt der Außenkontur 21 geschnitten, der nach dem Schneiden des Abschnitts AB in Schritt b) verblieben ist, so dass das Werkstückteil 11 sich von dem Werkstück 12 löst.

Bei einem alternativen Verfahrensablauf wird ebenfalls zunächst der Cluster 35 mit den drei benachbarten Innenkonturen 31, 33, 34 gebildet. Bevor die Innenkonturen 31, 33, 34 des Clusters 35 geschnitten werden, wird jedoch in einem ersten Schritt a1) ein erster Abschnitt AC der Außenkontur 21 des Werkstückteils 11 geschnitten. Der erste Abschnitt AC, der in Fig. 1 strichpunktiert dargestellt ist, erstreckt sich von einer ersten dem Cluster 35 benachbarten Ecke des Werkstückteils 11 (Punkt 21.5) über eine zweite dem Cluster 35 benachbarte Ecke des Werkstückteils 11 (Punkt 21.6) zur Mitte einer Längsseite des Werkstückteils 11 (Punkt 21.1). Der erste Abschnitt AC ist zu dem Cluster 35 benachbart angeordnet, d.h. der Punkt 21.1 ist nicht weiter als 3 cm von der am nächsten benachbarten Innenkontur 34 des Clusters 35 entfernt.

Nach dem Schneiden des ersten Abschnitts AB wird ein Abschnitt AE der Außenkontur 21 des Werkstückteils 11 geschnitten, der in Fig. 1 gestrichelt doppelpunktiert dargestellt ist. Der Abschnitt AE erstreckt sich von der Mitte einer Längsseite des Werkstückteils 11 (Punkt 21.4) zu einer dem Cluster 35 abgewandten Ecke 21.3 des Werkstückteils 11, d.h. der Abschnitt AE ist von dem Cluster 35 entfernt angeordnet. Durch das Schneiden des Abschnitts AE kann sich der Bereich des Werkstückteils 11 mit dem Cluster 35 abkühlen.

In einem nachfolgenden Schritt (Schritt a)) wird die erste Innenkontur 31 des Clusters 35 geschnitten, dann der weitere Abschnitt AB der Außenkontur 21 (s.o.), der ebenfalls von dem Cluster 35 entfernt angeordnet ist. Nachfolgend wird die zweite Innenkontur 33 des Clusters 35 geschnitten, bevor zum Abkühlen des Werkstückteils 11 im Bereich des Clusters 35 die Innenkontur 32 in Form des Quadrats geschnitten wird, die nicht Bestandteil des Clusters 35 ist. In einem darauffolgenden Schritt wird die dritte und letzte Innenkontur 34 des Clusters 35 geschnitten. Abschließend wird das Werkstückteil 11 aus dem Werkstück 12 freigeschnitten, indem der letzte, noch nicht geschnittene Abschnitt der Außenkontur 21 zwischen der dem Cluster 35 benachbarten Ecke (Punkt 21.5) und der Mitte der an diese Ecke angrenzenden Längsseite (Punkt 21.4) genschnitten wird.

Alternativ zu dem weiter oben beschriebenen Schritt, bei dem nach dem Schneiden des ersten, dem Cluster 35 benachbarten Abschnitts AC der Außenkontur 11 der von dem Cluster 35 entfernte Abschnitt AE der Außenkontur 11 geschnitten wird, kann zum Abkühlen des Bereichs des Clusters 35 vor dem Schneiden der ersten Innenkontur 31 die Kontur UA außerhalb des Werkstückteils 11 geschnitten werden. Ebenfalls alternativ zu dem weiter oben beschriebenen Schritt kann nach dem Schneiden des ersten, dem Cluster 35 benachbarten Abschnitts AC der Außenkontur 11 die Innenkontur 32 in Form des Quadrats geschnitten werden, die außerhalb des Clusters 35 liegt, bevor die erste Innenkontur 31 des Clusters 35 geschnitten wird. Auch in diesem Fall kann sich der Bereich des Clusters 35 nach dem Schneiden des ersten Abschnitts AC der Außenkontur 21 abkühlen.

Durch das weiter oben beschriebene Verfahren wird die Abarbeitungsreihenfolge durch eine geschickte Aufteilung der Außenkontur 21 des Werkstückteils 11 so angepasst, dass der Bereich des Clusters 35 mit den eng benachbarten Innenkonturen 31, 33, 34 stets ausreichend Zeit zum Abkühlen hat, so dass die Innenkonturen 31, 33, 34 des Clusters 35 mit hoher Maßhaltigkeit und Qualität geschnitten werden können.

## Patentansprüche

1. Verfahren zum Schneiden eines Werkstückteils (11) aus einem plattenförmigen Werkstück (12) mittels eines Bearbeitungsstrahls, mit den Schritten:
a) Vollständiges Schneiden mindestens einer Innenkontur (31) des Werkstückteils (11),
**gekennzeichnet durch**
b) Schneiden eines Abschnitts (AB) einer Außenkontur (21) des Werkstückteils (11), sowie
Vollständiges Schneiden mindestens einer weiteren Innenkontur (32) des Werkstückteils (11).

2. Verfahren nach Anspruch 1, **dadurch gekennzeichnet, dass** mindestens ein Cluster (35) von benachbarten Innenkonturen (31, 33, 34) gebildet wird und dass die Innenkontur (31) und die weitere Innenkontur (32) Teile des Clusters (35) von benachbarten Innenkonturen (31, 33, 34) sind.

3. Verfahren nach Anspruch 2, **dadurch gekennzeichnet, dass** in Schritt b) ein von dem Cluster (35) entfernter Abschnitt (AB) der Außenkontur (21) geschnitten wird.

4. Verfahren nach einem der vorhergehenden Ansprüche, **gekennzeichnet durch** den Schritt:
a1) Schneiden mindestens eines ersten Abschnitts (AC) der Außenkontur (21) des Werkstückteils (11) vor dem vollständigen Schneiden der mindestens einen Innenkontur (31).

5. Verfahren nach Anspruch 4, **dadurch gekennzeichnet, dass** der erste Abschnitt (AC) der Außenkontur (21) benachbart zu einem Cluster (35) von benachbarten Innenkonturen (31, 33, 34) angeordnet ist.

6. Verfahren nach Anspruch 4 oder 5, **dadurch gekennzeichnet, dass** nach dem Schneiden des ersten Abschnitts (AC) der Außenkontur (21) und vor dem vollständigen Schneiden der mindestens einen Innenkontur (31) ein von dem Cluster (35) entfernter Abschnitt (AE) der Außenkontur (21) geschnitten wird.

7. Verfahren nach Anspruch 4 oder 5, **dadurch gekennzeichnet, dass** nach dem Schneiden des ersten Abschnitts (AC) der Außenkontur (21) und vor dem vollständigen Schneiden der mindestens einen Innenkontur (31) eine weitere Innenkontur (32) geschnitten wird, die außerhalb des Clusters (35) liegt.

8. Verfahren nach Anspruch 4 oder 5, **dadurch gekennzeichnet, dass** nach dem Schneiden des ersten Abschnitts (AC) der Außenkontur (21) und vor dem vollständigen Schneiden der mindestens einen Innenkontur (31) eine Kontur (UA) an dem Werkstück (12) geschnitten wird, die außerhalb des Werkstückteils (11) liegt.

9. Verfahren nach einem der vorhergehenden Ansprüche, **gekennzeichnet durch** den Schritt:
d) Vollständiges Freischneiden des Werkstückteils (11) aus dem plattenförmigen Werkstück (12) entlang der Außenkontur (21) nach dem Schneiden der mindestens einen weiteren Innenkontur (32) des Werkstückteils (11).

## Claims

1. Method for cutting a workpiece portion (11) from a plate-like workpiece (12) by means of a processing beam, having the steps of:
a) completely cutting at least one inner contour (31) of the workpiece portion (11),
**characterised by**
b) cutting a portion (AB) of an outer contour (21) of the workpiece portion (11), and
c) completely cutting at least one additional inner contour (32) of the workpiece portion (11).

2. Method according to claim 1, **characterised in that** at least one cluster (35) of adjacent inner contours (31, 33, 34) is formed and **in that** the inner contour (31) and the additional inner contour (32) are portions of the cluster (35) of adjacent inner contours (31, 33, 34).

3. Method according to claim 2, **characterised in that** in step b) a portion (AB) of the outer contour (21) which is remote from the cluster (35) is cut.

4. Method according to any one of the preceding claims, **characterised by** the step of:
a1) cutting at least a first portion (AC) of the outer contour (21) of the workpiece portion (11) before completely cutting the at least one inner contour (31).

5. Method according to claim 4, **characterised in that** the first portion (AC) of the outer contour (21) is arranged adjacent to a cluster (35) of adjacent inner contours (31, 33, 34) .

6. Method according to claim 4 or 5, **characterised in that**, after cutting the first portion (AC) of the outer contour (21) and before completely cutting the at least one inner contour (31), a portion (AE) of the outer contour (21) which is remote from the cluster (35) is cut.

7. Method according to claim 4 or 5, **characterised in that**, after cutting the first portion (AC) of the outer contour (21) and before completely cutting the at least one inner contour (31), an additional inner contour (32) which is located outside the cluster (35) is cut.

8. Method according to claim 4 or 5, **characterised in that**, after cutting the first portion (AC) of the outer contour (21) and before completely cutting the at least one inner contour (31), a contour (UA) which is located outside the workpiece portion (11) is cut on the workpiece (12).

9. Method according to any one of the preceding claims, **characterised by** the step of:
d) cutting the workpiece portion (11) completely free from the plate-like workpiece (12) along the outer contour (21) after cutting the at least one additional inner contour (32) of the workpiece portion (11).

## Revendications

1. Procédé conçu pour séparer une partie (11) d'avec une pièce (12) en forme de plaque, par découpe au moyen d'un faisceau d'usinage, comprenant l'étape consistant :
a) à découper intégralement au moins un profil intérieur (31) de la partie (11) de la pièce, **caractérisé par**
b) la découpe d'un segment (AB) d'un profil extérieur (21) de la partie (11) de la pièce, ainsi que par
c) la découpe intégrale d'au moins un profil intérieur additionnel (32) de ladite partie (11) de la pièce.

2. Procédé selon la revendication 1, **caractérisé par** la formation d'au moins un regroupement (35) de profils intérieurs (31, 33, 34) voisins ; et par le fait que le profil intérieur (31) et le profil intérieur additionnel (32) constituent des parties dudit regroupement (35) de profils intérieurs (31, 33, 34) voisins.

3. Procédé selon la revendication 2, **caractérisé par** la découpe, à l'étape b), d'un segment (AB) du profil extérieur (21), éloigné du regroupement (35).

4. Procédé selon l'une des revendications précédentes, **caractérisé par** l'étape consistant :
a1) à découper, préalablement à la découpe intégrale du profil intérieur (31) à présence minimale, au moins un premier segment (AC) du profil extérieur (21) de la partie (11) de la pièce.

5. Procédé selon la revendication 4, **caractérisé par le fait que** le premier segment (AC) du profil extérieur (21) occupe un emplacement proche d'un regroupement (35) de profils intérieurs (31, 33, 34) voisins.

6. Procédé selon la revendication 4 ou 5, **caractérisé par le fait qu'**un segment (AE) du profil extérieur (21), éloigné du regroupement (35), est découpé à l'issue de la découpe du premier segment (AC) dudit profil extérieur (21) et préalablement à la découpe intégrale du profil intérieur (31) à présence minimale.

7. Procédé selon la revendication 4 ou 5, **caractérisé par le fait qu'**un profil intérieur additionnel (32), situé à l'extérieur du regroupement (35), est découpé à l'issue de la découpe du premier segment (AC) du profil extérieur (21) et préalablement à la découpe intégrale du profil intérieur (31) à présence minimale.

8. Procédé selon la revendication 4 ou 5, **caractérisé par le fait qu'**un profil (UA), situé à l'extérieur de la partie (11) de la pièce, est découpé dans ladite pièce (12) à l'issue de la découpe du premier segment (AC) du profil extérieur (21) et préalablement à la découpe intégrale du profil intérieur (31) à présence minimale.

9. Procédé selon l'une des revendications précédentes, **caractérisé par** l'étape consistant :
d) à dissocier intégralement la partie (11) d'avec la pièce (12) en forme de plaque, par découpe le long du profil extérieur (21), à l'issue de la découpe du profil intérieur additionnel (32) à présence minimale dans ladite partie (11) de la pièce.
